# EUROPEAN PATENT APPLICATION

(11) **EP 2 100 728 A1**
(43) Date of publication of application: **16.09.2009**
(21) Application number: 08405073.1
(22) Date of filing: 13.03.2008
(51) Int. Cl.: B32B 27/00, B65D 65/40

(54) **Multilayer film for packaging dry, pasty and liquid fill goods**

(71) Applicant: Alcan Technology & Management Ltd., 8212 Neuhausen am Rheinfall (CH)
(72) Inventor: Bevilacqua, Markus, 8213 Neunkirch (CH); Menard, Rico, 9533 Kirchberg (CH); Roos, Francoise, 67270 Alteckendorf (FR); Simon, Ernst, 78315 Radolfzell (DE)

(57) **Abstract**

A multilayer film (40) for the production of flexible packaging in the form of stick packs for dry, pasty and liquid fill goods has a biaxially oriented plastic layer as outer layer (43) and a sealable layer as inner layer (51), and middle layers (44-50). The outer layer (43), the inner layer (51) and the middle layers (44-50) are coextruded to form a both direction stretched film, and the multilayer film (10) has a maximum degree of dimensional change of 2% at most when exposed to temperature.

## Description

The invention relates to a multilayer film for the production of flexible packaging in the form of stick packs for dry, pasty and liquid fill goods, with a biaxially oriented plastic layer as outer layer and a sealable layer as inner layer, and optionally at least one middle layer. The invention also relates to a process suitable for manufacturing the multilayer film.

In the production of flexible packaging in the form of stick packs for dry, pasty and liquid fill goods, such as e.g. NESCAFE^{®} single portions, normally laminates with three or four layers are used. To achieve specific properties the individual layers are usually laminated by reactive adhesives or by extrusion lamination. Multilayer films, suitable for the above mentioned packaging applications, must exhibit the following properties:
- good barrier properties against water vapour (< 0.5 g/m² d at 38°C & 90% r.h., oxygen (< 0.5 cm³/m² d at 23°C & 50% r.h.) and other gases, as well as aromas
- opacity, e.g. for milk based products (for coffee the packaging may be transparent)
- coefficient of friction (COF) inside/inside, inside/metal, outside/metal and outside/outside: < 0.2-0.3, depending on application
- low tear strength for easy opening, controlled straight easy tearing in machine direction (MD) or transverse direction (TD), depending on the application
- linear tear propagation
- stiffness for a good machinability
- thermal sealability of the inner side in case of fin seal
- thermal sealability of the inner side against the outer side in case of lap seal
- thermal resistance to avoid deformation of the film during sealing
- good printability of the outer side, high or low gloss appearance, depending on application
- high puncture resistance to avoid pinholes by sharp-edged particles
- antistatic properties to avoid filling problems
- limited curl
- flex crack resistance (barrier stability after flexing the packaging)

Known films for the production of flexible stick pack packaging for dry, pasty and liquid fill goods are normally laminates with three or four layers, each layer effecting a specific property of the laminate. Such laminates are normally laminated using a two component adhesive system and/or extrusion-lamination, respectively. A biaxially oriented PET film forming the outer layer is used as a printing support, providing a high-gloss surface and a good thermal resistance. Another oriented or unoriented PET film can be arranged in the middle as a barrier layer support or a layer for improving mechanical properties, such as e.g. strength. Frequently, an aluminium foil is used inside the laminate as barrier layer against water vapour, oxygen or aroma loss. The inner layer generally consists of an unoriented, mono- or coextruded heat sealable film manufactured e.g. in the blow or cast process. In the production process via adhesive lamination the individual films are connected to the laminate using solvent-containing or solvent-free two-component adhesives, often in two or more processing steps. This process has several disadvantages: the adhesive lamination process is not harmless due to solvent wastage and solvent recycling both from an economical and ecological view. Other risk factors are e.g. primary aromatic amines which can migrate into the packaged good due to adhesive which has not fully reacted. Therefore, a process which does not include reactive chemistry would be desirable. A partial solution of this problem is the production process via extrusion lamination. Here, the adhesive function is taken over by a polymer melt applied between the individual films and - depending on the requirements - polyethylene or a polyethylene based acidic, anhydrous acidic or acrylic copolymer is used as an adhesion donor. In addition, the sealing layer may be applied to the inner side of the laminate as an extruded film by extrusion coating technique. With higher requirements to the laminate, so-called solvent-containing primers are necessary as tie layers, which complicate the process in view of the logistics of the raw materials. A substantial disadvantage of the adhesive lamination is a significant limitation of the functionality of the sealing film which is obtainable e.g. with coextruded cast or blown films. A process creating a multi layer film suitable for stick packs solely from the melt in one production step without the need of raw material handling from a solvent would therefore be desirable.

The finished pack properties, such as the feel of the surface or haptics, form stability, strength etc., are achieved by a corresponding combination of the layers regarding arrangement and thickness. The variation range in the domain of oriented films is limited e.g. in regard to available thickness and variety. Therefore, e.g. biaxially oriented PET films with a thickness of less than 12 µm can not be produced economically by using conventional processes. This leads to solutions which function from a technical point of view, but regarding the corresponding pack properties, such as thermally resistant outer layer, sealability etc., the necessary material consumption is un-proportionally high. Therefore, in order to achieve the desired finished pack properties, suitable multi layer film for stick packs which could be produced in a single process step with easy adjustable layer structure both in sequence and thickness are desirable.

Biaxially stretched polymeric multilayer films can be produced via blown film extrusion by forming two or three bubbles. The process is called "double bubble (2B)" and "triple bubble (3B)" process, respectively. The blown film extrusion with three bubbles, i.e. the "triple bubble process", as explained in the following, is herein also named "3B process" and films produced with the 3B process are called "3B films".

In the 3B process, a polymer mass is extruded through a ring-shaped nozzle or circular extrusion die forming a thick tube in the form of a monolayer or multilayer film, calibrated to an exact diameter after leaving the nozzle and thereafter quenched.

Subsequently, the tube is heated to a selected stretching temperature and in a further step inflated with air or another suitable gas between two pairs of nip rolls to enlarge the diameter of the bubble, thereby forming a second bubble and being stretched in transverse direction (TD). The stretching in longitudinal or machine direction (MD) is carried out by adjusting a different rotation speed of the nip rolls, thereby limiting the length of the second bubble in its longitudinal direction. The tube expanded to a bubble is in this way transported with a higher speed compared to the extrusion speed so that its orientation is maintained in transverse and machine direction, respectively.

The stretching process, applied on the film during the first two bubble steps, introduces some mechanical stress in the film. Consequence is the tendency of the film to shrink back, close to its initial dimension, as soon as heated to temperatures similar to the temperatures applied during the stretching process in the second bubble.

To control the mechanical tension introduced in the film by the biaxial orientation and the following rapid quench, the film is expanded to a third bubble and fixed in the inflated state, thereby maintaining a controlled temperature and a controlled inner pressure of the bubble. This heat treatment of the third bubble contributes to the flatness especially of multilayer films, thereby maintaining high stability and good mechanical strength obtained by biaxial orientation. An additional advantage of the third bubble process is to control the film residual mechanical stress and, consequently, the shrinking properties of the final package if heated afterward.

Main application for 2B and 3B webs are shrink films for vacuum skin packaging. Shrink behaviours are targeted in order to allow minimal headspace in packaging of foodstuffs.

From EP 1 410 902 A1, WO 2004/080805 A2, WO 01/03922 A1 and WO 2004/110755 A1 multilayer films produced by the 2B and 3B process are known as so called shrink films for airtight packaging of foodstuffs, the film during the shrinking process snuggling closely to the goods to be packed without forming air containing microcavities. Particularly for packaging large pieces of meat including bones, a tube continuously manufactured using the 2B or 3B process is divided into individual tube sections. Each tube section is first closed at one of its tube openings by heat sealing. The pouch produced in this way and still being open on one side is closed after filling of the goods to be packed by a second heat sealing and thereafter shrinked by applying heat until the pouch film fully snuggles the filling. The degree of shrinking of the multilayer films is typically between 20 and 60 %.

Due to the heavy shrinking of 3B films by exposing to high temperature, until today the use of these films in packaging was limited to the aforementioned use of the shrinking process for the packaging of products where a form-fit wrapping is desired.

The object of the present invention is to provide a multilayer film of the kind described at the beginning which can be manufactured without the disadvantages of the prior art processes.

That objective is achieved by way of the invention in that the outer layer, the inner layer and, if present, the middle layer/s are coextruded to form a biaxially oriented 3B film, and the multilayer film has a maximum degree of shrinking of 2% at most when exposed to 140 °C.

A process suitable for manufacturing the multilayer film is **characterized in that** the outer layer, the inner layer and, if present, the middle layer/s are coextruded to form a biaxially oriented triple bubble (3B) film, and time and temperature in the third bubble are selected to achieve a maximum degree of shrinking of the 3B film of 2% at most when the multilayer film is exposed to 140 °C.

The setting and adjustment of time and temperature conditions in the third bubble to achieve the required low degree of shrinking of the 3B film can be determined by a person skilled in the art.

A practically negligible shrinking is intended. Preferably, the admissible maximum degree of shrinking of the 3B films is 1% at most when exposed to a temperature of 140 °C.

The 3B films used according to the present invention are thermally stabilized and fixed in the third bubble, respectively. Therewith it is assured that the films will not shrink or curl during additional processing steps such as e.g. manufacturing stick packs by sealing various film webs.

With the 3B coextrusion process the deformation of the material in the second bubble results in films that behave isotropic over the whole surface area so that practically the whole 3B film production can be processed to stick packs.

The coextrusion via the 3B process of all layers necessary for the manufacture of stick pack packaging in one process operation leads to saving one or more process steps and therefore also to reduced costs in comparison with conventional production processes.

A significant advantage of the 3B films according to the present invention in comparison to conventionally manufactured films and laminates, respectively, is, among others, the following. Due to the fact that using the 3B coextrusion process, films with biaxially oriented layers of substantially lower thickness can be produced, which leads to substantial material savings. Using a 3B process, films with a biaxially oriented PET-layer having a thickness of e.g. 2 to 12 µm are possible. On the other hand, thick sealing layers, which could not be applied economically to conventionally manufactured films by lacquering, are possible.

Another advantage is the possibility of dyeing an inner layer of the film, thus preventing contamination of the sealing layer with dye when winding the film. The same way the outer layer of the film may be whitened to have a white background for later printing the outer side of the film.

Still another advantage of the multilayer films manufactured according to the present invention is that the functionalities of high puncture resistance and good barrier properties can be created in one single process step.

Further advantages are a higher operational safety, better environmental conditions and reduced process costs by avoiding reactive adhesives and solvents during the production process. Still another advantage of the multilayer films manufactured according to the present invention is the omission of the curing times for adhesively bonded laminates which in turn leads to time and cost savings.

The 3B film produced with the 3B process is slit and wound in a roll. For an additional lacquering, printing, over-lacquering and/or for carrying out other additional process steps in order to achieve technological and optical properties, the 3B film tube manufactured with the 3B process can be cut into a desired width in order to carry out the further processing steps, wound, supplied to the further processing steps and subsequently processed directly into stick packs.

Since good barrier properties are essential for stick pack packaging and since it is not possible to incorporate an aluminium layer into the packaging film according to the present invention, the multilayer film manufactured via the 3B process has to be provided with a barrier layer in an additional process step. This can take place by vacuum deposition of metals and or organic or inorganic oxides. The 3B film can be metallised preferably with aluminium or coated with stainless steel or another metal, but also coated with ceramics, preferably with silicon oxide or aluminium oxide.

Compared to conventional processes for the manufacture of multilayer films for stick pack packaging via adhesive lamination, the multilayer film according to the present invention manufactured by the 3B process offers the following advantages:
- less process steps, thus lower actual costs
- no need for recycling solvents
- omission of curing times, hence shortening the production process
- omission of primary aromatic amines in the production process
- greater standardisation of the production process, hence advantages in logistics, reduced production documentation, less work with lab analysis
- less curl
- no risk of delamination

The 3B multilayer film according to the present invention used in the manufacture of stick packs for dry, pasty and liquid fill goods has preferably one of the following layer configurations:
PET : tie : PA : EVOH : PA : tie : sealing layer
PET : tie : PP : tie : EVOH : tie : PET : tie : sealing layer

The tie layers comprise e.g. a material on the basis of maleic acid anhydride (MAH), acrylate or carbonic acids.

Due to the PA layers the film has excellent tear and puncture resistance. The EVOH layer exhibits an improved oxygen barrier. The outermost PET layer may be white or transparent.

The sealing layer preferably contains a material selected of the group consisting of polyolefines (PO), particularly polyethylene (PE)or polypropylene (PP), polyamide (PA), polyesters and copolymers thereof, as well as ionomeres (ION), hotmelt adhesive, particularly on the basis of ethylene vinylacetate copolymer (EVA), ethylene butyl acrylate (EBA), ethylene methyl acrylate (EMA), and blends of the aforementioned materials.

The 3B film can be printed and/or overlacquered with a thermo-protective lacquer.

Further advantages, features and details of the invention are revealed in the following description of preferred exemplary embodiments and with the aid of the drawing which shows schematically in
- Fig. 1: the layer composition of a conventionally manufactured packaging film for the production of stick packs according to the prior art;
- Fig. 2: an alternative layer composition of a conventionally manufactured packaging film for the production of stick packs according to the prior art;
- Fig. 3: the layer composition of a multilayer film for the production of stick packs according to the present invention manufactured via the 3B process;
- Fig. 4: an alternative layer composition of a multilayer film for the production of stick packs according to the present invention manufactured via the 3B process.

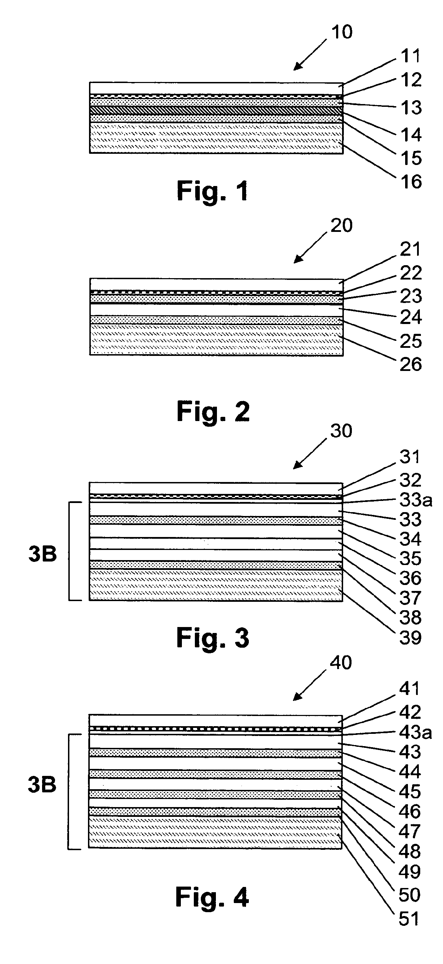

A conventionally manufactured multilayer film 10 according to the prior art shows in Fig. 1 the following layer configuration:
- 11: PET film, 12 µm
- 12: ink printing
- 13: adhesive layer, 2-7 g/m²
- 14: aluminium foil, 6.35-9 µm
- 15: adhesive layer, 2-7 g/m²
- 16: PE sealing film, 40-50 µm

In the production of the multilayer film 10, in a first step, the PET film 11 is reverse printed with ink 12. In a second step, the aluminium foil 14 is bonded to the PE sealing film 16 via adhesive layer 15. Finally, in a third step, the Al/PE laminate 14/15/16 is bonded to the reverse printed PET film 11 via adhesive layer 13.

An alternative conventionally manufactured multilayer film 20 according to the prior art shows in Fig. 2 the following layer configuration:
- 21: first PET film, 12 µm
- 22: ink printing
- 23: adhesive layer, 2-7 g/m²
- 24: metallised second PET film, 12 µm
- 25: adhesive layer, 2-7 g/m²
- 26: PE sealing film, 40-50 µm

In the production of the multilayer film 20, in a first step, the first PET film 21 is reverse printed with ink 22.

In a second step, the second PET film 24 is metallised and bonded to the PE sealing film 26 via adhesive layer 25. In a third step, the PET/PE laminate 24/25/26 is bonded to the printed first PET film 21 via adhesive layer 23.

A multilayer film 30 manufactured according to the present invention shows in Fig. 3 the following layer configuration:
- 31: thermal protective lacquer layer
- 32: ink printing
- 32a: SiOₓ barrier layer, vacuum deposited onto PET layer 33
- 33: PET layer
- 34: tie layer
- 35: first PA layer
- 36: EVOH layer
- 37: second PA layer
- 38: tie layer
- 39: PE sealing layer

In the production of the multilayer film 30 according to the present invention, at first a biaxially oriented 3B film (see Fig. 3) is manufactured by coextruding PET, tie, PA, EVOH, PA, tie and PE forming later the sealing layer. The PE sealing layer is provided with antistatic properties. After manufacturing the multilayer film 30 in the described manner the PET layer 33 is provided with SiOₓ barrier layer 33a by vacuum deposition, optionally covered with a primer and thereafter front printed with ink 32 and the ink printing 32 is then overlacquered with the thermal protective lacquer 31.

An alternative multilayer film 40 manufactured according to the present invention shows in Fig. 4 the following layer configuration:
- 41: thermal protective lacquer layer
- 42: ink printing
- 43a: SiOₓ barrier layer, vacuum deposited onto PET layer 43
- 43: PET layer
- 44: tie layer
- 45: PP layer
- 46: tie layer
- 47: EVOH layer
- 48: tie layer
- 49: PET layer
- 50: tie layer
- 51: PE sealing layer

In the production of the multilayer film 40 according to the present invention, at first a biaxially oriented 3B film (see Fig. 4) is manufactured by coextruding PET, tie, PP, tie, EVOH, tie, PET, tie and PE forming later the sealing layer. The PE sealing layer is provided with antistatic properties. After manufacturing the multilayer film 40 in the described manner the PET layer 43 is provided with SiOₓ barrier layer 43a by vacuum deposition, optionally covered with a primer, and thereafter front printed with ink 42 and the ink printing 42 is overlacquered with the thermal protective lacquer 41.

## Claims

1. Multilayer film for the production of flexible packaging in the form of stick packs for dry, pasty and liquid fill goods, with a biaxially oriented plastic layer as outer layer and a sealable layer as inner layer, and optionally at least one middle layer,
**characterized in that**
the outer layer, the inner layer and, if present, the middle layer/s are coextruded to form a biaxially oriented 3B film, and the multilayer film has a maximum degree of shrinking of 2% at most when exposed to 140 °C.

2. Multilayer film according to claim 1, **characterized in that** the 3B film has a maximum degree of shrinking of 1% at most when exposed to 140 °C.

3. Multilayer film according to claim 1 or 2, **characterized in that** the 3B film has one of the following layer constructions:
PET : t : PA : EVOH : PA : t : sealing layer
PET : t : PP : t : EVOH : t : PET : t : sealing layer where t is a tie layer

4. Multilayer film according to claim 3, **characterized in that** the tie layer is a material on the basis of maleic acid anhydride (MAH), acrylate or carbonic acid.

5. Multilayer film according to one of claims 1 to 4, **characterized in that** the sealing layer is a material selected from the group consisting of polyolefines (PO), particularly polyethylene (PE) or polypropylene (PP), polyamide (PA), polyesters and copolymers thereof, as well as ionomeres (ION), hotmelt adhesive, particularly on the basis of ethylene vinylacetate copolymer (EVA), ethylene butyl acrylate (EBA), ethylene methyl acrylate (EMA), and blends of the aforementioned materials.

6. Multilayer film according to one of claims 1 to 5, **characterized in that** the 3B film is printed and/or covered with a thermal protective lacquer.

7. Multilayer film according to one of claims 1 to 5, **characterized in that** the 3B film is metallised, preferably with aluminium or with stainless steel.

8. Multilayer film according to one of claims 1 to 5, **characterized in that** the 3B film is coated with a ceramic material, preferable with silicon oxide or aluminium oxide.

9. Use of a multilayer film according to one of the preceding claims for the production of flexible packaging for dry, pasty and liquid fill goods.

10. Use according to claim 9 for the production of stick packs.

11. Process for manufacturing a multilayer film for the production of flexible packaging in the form of stick packs for dry, pasty and liquid fill goods, with a biaxially oriented plastic layer as outer layer and a sealable layer as inner layer, and optionally at least one middle layer,
**characterized in that**
the outer layer, the inner layer and, if present, the middle layer/s are coextruded to form a biaxially oriented triple bubble (3B) film, and time and temperature in the third bubble are selected to achieve a maximum degree of shrinking of the 3B film of 2% at most when the multilayer film is exposed to 140 °C.

12. Process according to claim 11, **characterized in that** the 3B film has a maximum degree of shrinking of 1% at most when exposed to a temperature of 140 °C.

13. Process according to claim 11 or 12, **characterized in that** the 3B film is printed and/or provided with a thermal protective lacquer.

14. Process according to one of claims 11 to 13, **characterized in that** the 3B film is metallised, preferably with aluminium or stainless steel.

15. Process according to one of claims 11 to 13, **characterized in that** the 3B film is coated with a ceramic material, preferable with silicon oxide or aluminium oxide.
